# EUROPEAN PATENT APPLICATION

(11) **EP 4 026 691 A1**
(43) Date of publication of application: **13.07.2022**
(21) Application number: 21150917.9
(22) Date of filing: 11.01.2021
(51) Int. Cl.: B32B 1/08, B32B 3/28, B32B 7/027, B32B 7/12, B32B 27/08, B32B 27/32, B32B 27/40

(54) **MULTILAYER CONDUIT WITH SUPPORTING BODY AND METHOD TO PRODUCE SUCH A CONDUIT**

(71) Applicant: ABB Schweiz AG, 5400 Baden (CH)
(72) Inventor: Etzel, Dietmar, 8625 Gossau (CH); Zulali, Bukurosh, 8630 Rüti ZH (CH); Stünzi, Erich, 8345 Uster (CH)
(74) Representative: Qip Patentanwälte Dr. Kuehn & Partner mbB

(57) **Abstract**

A conduit (100) comprising a multilayer wall (102) comprises an outer layer (104) made of a first plastic material (110) and an inner layer (106 made of a second plastic material (112), wherein the second plastic material (112) has a s higher hardening speed than the first plastic material (110), wherein the outer layer (104) and the inner layer (106) are co-extruded and cooled, wherein due to the higher hardening speed the inner layer (106) hardens earlier than the outer layer (104) and serves as a supporting body for the still at least partially plasticized outer layer (104).

## Description

### FIELD OF THE INVENTION

The invention relates to a conduit, such as a cable conduit, and a method to produce such a conduit.

### BACKGROUND OF THE INVENTION

Cable conduits may be made typically out of thermoplastic materials like polyolefins or polyamide materials. For special applications cable conduits may be made of polyurethane material. The polyurethane material has desirable material characteristics. In particular, the polyurethane material may have good flexibility and abrasion resistance. Since the polyurethane material hardens only slowly after extrusion and cooling due to a low crystallization rate, the cable conduit may be plastically deformable to a certain degree until the polyurethane material has finished crystallization. Thus, a freshly extruded and molded cable conduit made of polyurethane material has to be handled with care and can show deformation.

EP 2 535 992 B1 describes a dynamic multilayer corrugated conduit with wear indicator.

### DESCRIPTION OF THE INVENTION

It is an objective of the invention to provide a cable conduit made of polyurethane material, which is easier to handle after extrusion and molding.

This objective is achieved by the subject-matter of the independent claims. Further exemplary embodiments are evident from the dependent claims and the following description.

The invention relates to a conduit. The invention further relates to a method to produce such a conduit. For example, the conduit may be a cable conduit. The conduit may be used in automation and robotics applications for cable protection.

According to an embodiment of the invention, the method for producing the conduit comprises: supplying a molten first plastic material and a molten second plastic material, wherein the second plastic material has a higher hardening speed than the first plastic material; creating a multilayer wall of the conduit by coextruding the molten first plastic material to form an outer layer of the multilayer wall and coextruding the molten second plastic material to form an inner layer of the multilayer wall; and cooling and molding the conduit, wherein the inner layer hardens faster than the outer layer due to the higher hardening speed and serves as a support body for the outer layer, which is still at least partially deformable due to the lower hardening speed.

When the inner layer has hardened, crystallized, polymerized and/or cured, the inner layer may keep a given shape. The hardened, crystallized, polymerized and/or cured inner layer may act as a kind of skeleton for the outer layer. The hardened, crystallized, polymerized and/or cured inner layer may prevent plastic deformation of the outer layer when the not yet completely hardened, crystallized, polymerized and/or cured conduit is packaged or rolled up for delivery or storage. In particular, the inner layer may prevent the deformation of the conduit from a circular cross-section to an oval cross-section.

According to an embodiment of the invention, the conduit comprises a multilayer wall and the multilayer wall comprises an outer layer made of a first plastic material; an inner layer made of a second plastic material; wherein the second plastic material has a higher hardening speed than the first plastic material.

Such a conduit may be made with the method as described above and below. The conduit may be made such that during co-extrusion and cooling of the outer layer and the inner layer, the inner layer hardens faster than the outer layer due to its higher hardening speed compared to the outer layer and the inner layer thus serves as a supporting body for the still at least partially deformable outer layer.

A conduit may be a pipe or a hose or a corrugated pipe or hose The conduit may have an inner diameter between about 15 mm and 130 mm. An outer diameter of the conduit may be bigger than the inner diameter by two times a wall thickness or corrugated by two times a wall thickness plus the geometry of a coarse or fine profile of the conduit. In particular the conduit may be corrugated and/or may have a conduit size of nominal width 23 to nominal width 95, corresponding to outer diameters between about 28 mm and about 106 mm due to the corrugation. The conduit may be configured to protect a plurality of cables arranged inside the conduit.

According to an embodiment, the conduit comprises a multilayer wall. A multilayer wall may have multiple layers. The layers may be configured to serve different purposes.

According to an embodiment, the multilayer wall comprises an outer layer and an inner layer. An outside of the outer layer may form an outer diameter of the conduit. An inner surface of the inner layer may form an inner diameter of the conduit. The layers may be continuous along the conduit.

According to an embodiment, the outer layer is made of a first plastic material and the inner layer is made of a second plastic material. During co-extrusion, the first plastic material and the second plastic material are supplied in a molten state. The first plastic material and the second plastic material may be molten in separate extruders. Due to the significantly higher hardening speed, the second plastic material hardens earlier than the first plastic material. At a hardening, crystallizing, polymerizing and/or curing point of the second plastic material, the first plastic material may still be at least partially deformable.

According to an embodiment the multiple layers are co-extruded in one process to create the multilayer wall. The first and the second melted plastic material is brought together in an extrusion head, so that the layers are placed on top of each other, with the outer layer on the outside and the inner layer on the inside. This can be referred to as co-extrusion. The melt strand is taken over by a corrugator, which has the task of forming and cooling the melt strand as a corrugated profile. Subsequent treatment can be further cooling such as a water bath and printing and winding.

According to an embodiment, the multilayer wall has a wall thickness between 0,5 mm and 1,5 mm. The wall thickness may depend on a diameter of the conduit. A wider conduit may have a thicker wall.

According to an embodiment, the first plastic material is a polyurethane material. A polyurethane material may have desirable material characteristics. The polyurethane material may be abrasion resistant. The polyurethane material may be elastic. The polyurethane material may have a long crystallization time. The polyurethane material may be a polyether polyurethane, a polyether-ester polyurethane or a polyester polyurethane or a mixture thereof. The polyurethane material may be a thermoplastic Polyurethane.

According to an embodiment, the first plastic material has a shore hardness between A 75 and D 75 in a hardened, crystallized and/or cured condition. In this range of shore hardness, the outer layer may be very flexible.

According to an embodiment, the first plastic material comprises a crystallization additive. A crystallization additive may lead to an accelerated crystallization. The accelerated crystallization may lead to a shorter production time and a shortened vulnerability of deformation.

According to an embodiment, the first plastic material comprises a slip additive. A slip additive may lead to reduced friction on other surfaces. Reduced friction may reduce wear on the conduit. Reduced wear may prolong a lifetime of the conduit.

According to an embodiment, the outer layer has a layer thickness between 30% and 85% of the wall thickness of the multilayer wall. For dominating characteristics of the polyurethane material, the outer layer may have a layer thickness between 40% to 85% of the wall thickness of the multilayer wall. In particular, the outer layer may have 60% of the wall thickness of the multilayer wall.

According to an embodiment, the second plastic material is a polypropylene material. The polypropylene material may have desirable material characteristics. The polypropylene material may have a short crystallization time. The polypropylene material may be dimensionally stable. The polypropylene material may be polypropylene as homopolymer or copolymer. The polypropylene material may also be impact modified. The polypropylene material may be a mixture of a polypropylene as homopolymer, copolymer with a polyolefin elastomer as impact modifier.

According to an embodiment, the second plastic material has a modulus between 200 MPa and 1500 MPa in a hardened, crystallized and/or cured condition. In particular, the second plastic material may have a modulus of around 1000 MPa. In that range the second plastic material may be flexible enough for rolling up the conduit and rigid enough to withstand the resulting forces of deformation.

In an embodiment, the inner layer has a layer thickness between 10% to 65% of the wall thickness of the multilayer wall. In particular the inner layer may have a layer thickness of 30% of the wall thickness of the multilayer wall.

According to an embodiment, the multilayer wall is corrugated after the co-extrusion, to create a corrugated conduit. All layers of the multilayer wall may be corrugated. A corrugated conduit may be more flexible than a straight conduit. A minimum bending radius of the conduit may be defined by touching corrugations on the inside of the bend. The corrugated wall may be more stable against ovalization than a straight wall. The conduit may be extruded by continuous co-extrusion as a hose with a straight multilayer wall. The corrugation may be applied after the co-extrusion by a blow molding process with a travelling corrugator.

According to an embodiment, the outer layer has a first color and the inner layer has a second color. A middle layer may have a third color. The first color, the second color and the third color may be different from each other. Different colored layers may be an abrasion indicator. An abrasion indicator may be a maintenance indicator. When the outer layer has worn through, the different coloring of the inner layer or middle layer will show. That way there is enough time to order a replacement conduit, before the inner layer or middle layer has worn through.

According to an embodiment, a third plastic material is supplied in a molten state. The third plastic material is an adhesion promoter configured to bond to the first plastic material and the second plastic material. The adhesion promoter is co-extruded to form a middle layer of the multilayer wall between the outer layer and the inner layer, wherein the adhesion promoter bonds to the first plastic material and the second plastic material. An adhesion promoter may have functional groups in between the molecule and/or have chemical end groups. The functional groups and/or end groups may bond to the first plastic material. The non or less polar parts of the adhesion promoter serve to make it compatible with the material. The adhesion promoter may be a copolymer or terpolymer as a bonding agent for polyurethane and polypropylene.

According to an embodiment, the middle layer has a layer thickness between 5% to 20% of the wall thickness of the multilayer wall. In particular the middle layer may have a layer thickness of 10% of the wall thickness of the multilayer wall.

According to an embodiment, the multilayer wall is corrugated, the first plastic material is a polyurethane material and the second plastic material is a polypropylene material. The middle layer is an adhesion promoter configured to bond to the polyurethane material and the polypropylene material. A combination of polyurethane outer layer and polypropylene inner layer may provide a flexible conduit with good resistance against ovalization.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawing.
Fig. 1 schematically shows a cross-section of a conduit according to an embodiment of the invention.
Fig. 2 shows a flow diagram for a method for producing the conduit of Fig. 1 according to an embodiment of the invention.

The reference symbols used in the drawing, and their meanings, are listed in summary form in the list of reference symbols. In principle, identical parts are provided with the same reference symbols in the figure.

### DETAILED DESCRIPTION OF EXEMPLARY EMBODIMENTS

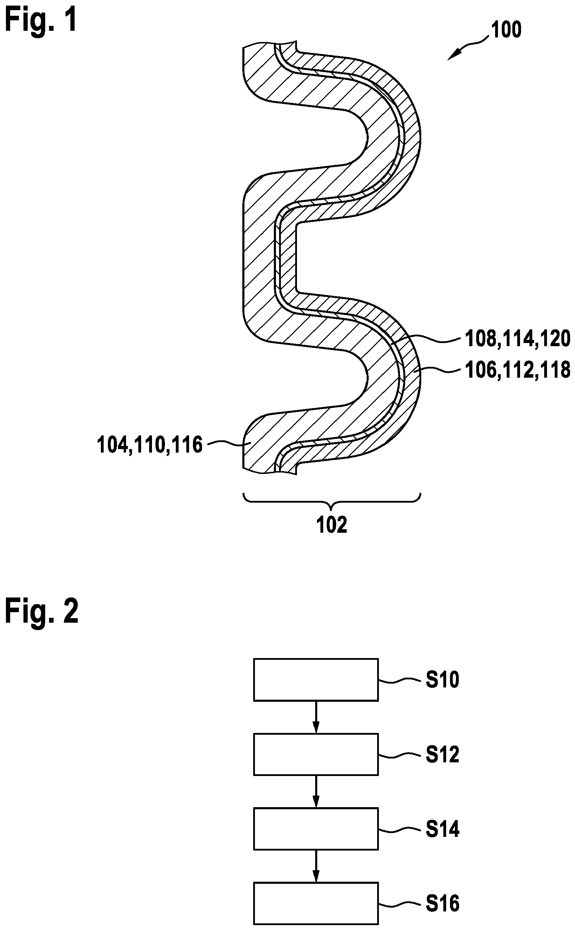

Fig. 1 schematically shows a detail of a cross-section of a conduit 100 according to an embodiment. The conduit 100 is a cable conduit 100 with a circular cross-section. The conduit 100 is corrugated. The conduit 100 has a multilayer wall 102. The multilayer wall 102 has three layers. The multilayer wall 102 has an outer layer 104 and an inner layer 106. A middle layer 108 is arranged between the outer layer 104 and inner layer 106. The layers are co-extruded from a multilayer nozzle in one extrusion process.

The outer layer 104 is made of a first plastic material 110 and the inner layer 106 is made of a second plastic material 112. The middle layer 108 is made of a third plastic material 114. The first plastic material 110, the second plastic material 112 and the third plastic material 114 are different from each other. Each of the plastic materials is supplied to the multilayer nozzle in a molten state by a separate extruder.

The first plastic material 110 may have a low adhesion to the second plastic material 112. The third plastic material 114 has good adhesion to the first plastic material 110 and the second plastic material 112.

The first plastic material 110 hardens slowly. The second plastic material 112 hardens faster than the first plastic material 110. The hardening may happen due to a crystallization, a polymerization and/or a curing of the respective plastic material. After the co-extrusion the second plastic material 112 hardens to a dimensional stability before the first plastic material 110 completely hardens. The second plastic material 112 supports the first plastic material 110 in a state of high viscosity until it reaches its intended hardness.

In an embodiment, the first plastic material 110 is a polyurethane material 116, the second plastic material 112 is a polypropylene material 118 and the third plastic material 114 is an adhesion promoter 120.

In an embodiment, the first plastic material 110 further may comprise a sliding additive.

In an embodiment, the outer layer 104 has a layer thickness of 60% of a total wall thickness of the multilayer wall 102, the middle layer 108 has a layer thickness of 10% of the total wall thickness and the inner layer 106 has a layer thickness of 30% of the total wall thickness.

In other words, a formulation for a multilayer corrugated conduit with a soft outer layer of polyurethane, a suitable adhesion promoter and a sufficiently stable, harder inner layer is presented. The corrugated conduit is produced in a co-extrusion process with a special layer thickness distribution. In particular, the corrugated conduit may be used in dynamic robotic applications.

Despite sufficient cooling, a conventional monolayer corrugated polyurethane conduit may be deformed by its own weight during winding and subsequent storage in the packaging cartons due to slow crystallization. The deformation shows itself in an ovality of the corrugated conduit. The service properties of the polyurethane corrugated tube may be reduced by the ovality when it is later used as a robotic corrugated tube with small bending radii. Optimized processing and/or crystallization acceleration may reduce the ovality of the monolayer polyurethane conduit.

The presented approach provides a corrugated polyurethane conduit which is dimensionally stable and does not have a tendency to ovality. The tendency to ovality is removed by a defined layer structure of a three-layer corrugated conduit, a matching manufacturing process in co-extrusion and the defined materials for it.

The presented conduit comprises a three-layer structure which has a polyurethane material as an outer layer, a middle layer consisting of a suitable adhesion promoter and an inner layer consisting of a sufficiently dimensionally stable material is proposed.

The inner layer thus serves as a supporting body for the slowly crystallizing polyurethane, so that the manufactured three-layer corrugated conduit has no ovality during subsequent winding and storage.

The layer structure in the co-extrusion process consists of:
an outer layer component A of a polyether polyurethane, a polyether ester polyurethane or polyester polyurethane or mixtures thereof in the hardness range from Shore A 75 to Shore D 75 with slip additives or slip additives and crystallization additives with a layer thickness of 30 to 85% of the total corrugated conduit wall thickness;
a middle layer component B of a suitable adhesion promoter of a suitable copolymer or terpolymer as a bonding agent for polyurethane and polypropylene with a layer thickness of 5-20% of the total corrugated conduit wall thickness; and
an inner layer component C of a polypropylene as homopolymer, copolymer, also in the version as impact modified or as a mixture of a polypropylene as homopolymer, copolymer with a polyolefin elastomer as impact modifier with a resulting total modulus of elasticity of 200-1500 MPa with a layer thickness of 10 to 65% of the total corrugated conduit wall thickness. The total corrugated conduit thickness is 0.5 to 1.5 mm, particularly preferred 0.7-1.1 mm.

The layer thickness of the outer layer component A is particularly preferred in the range of 40-85 % of the total corrugated conduit thickness for a polyurethane-like character.

In an embodiment of the polyurethane-like multilayer corrugated conduit, the
outer layer component A is a polyether polyurethane with sliding additives with the layer thickness of 60%;
the middle layer component B is a MAH-grafted polyolefin with the layer thickness of 10%; and
the inner layer component C is an impact-modified polypropylene with a modulus of elasticity of 1000 MPa in a blend with a POE elastomer with the layer thickness of 30% for a total corrugated conduit thickness of rounded 0.8 mm.

As an example only, the melting point of the outer layer component (polyether polyurethane) may be in the range of 195 - 205°C, and the melting point of the inner layer component (impact-modified polypropylene) may be in the range of 145 - 155°C.

Polyurethane hardens slower than polypropylene when cooling down from its molten state. This is due to its chemical structure, which results in a lower tendency towards crystallization and thus in a slower hardening speed.

The individual layers have been colored differently for better manufacturability. The resulting multilayer corrugated conduit shows very good dynamics.

Different wall thickness ratios for component A, component B or component C may be used.

Harder Polyurethane, especially those of Shore D 64 and Shore D 74 have higher crystallization speed and hardening speed due to more hard segments. Therefore, also a combination in the context of the invention may possible with a softer polyurethane as component A and a harder polyurethane as component C, whereby component B then consists of one of the materials of component A or component B.

Other material combinations based on soft materials other than polyurethane in component A in combination with an adhesion promoter component B and an inner layer component C may be used.

Fig. 2 shows a flow diagram for a method for producing a conduit 100, such as shown in Fig. 1.

In step S10, a molten first plastic material 110 and a second molten plastic material 112 are supplied, wherein the second plastic material 112 has a higher hardening speed than the first plastic material 110. It may be that an adhesion promoter 120 is supplied between the first plastic material 110 and a second plasticized plastic material 112.

The first molten plastic material 110, second molten plastic material 112 and optionally the adhesion promoter 120 may be made of the materials as described with respect to Fig. 1.

The first plastic material 110 may be a polyurethane material 116. The first plastic material 110 may comprise a crystallization additive and/or a slip additive.

The second plastic material 112 may be a polypropylene material 118.

In step S12, a multilayer wall 102 of the conduit 100 is created by co-extruding the plasticized first plastic material 110 to form an outer layer 104 of the multilayer wall 102 and co-extruding the molten second plastic material 112 to form an inner layer 106 of the multilayer wall 102. The adhesion promoter 120 also may be co-extruded simultaneously to form a middle layer 108 of the multilayer wall 102 between the outer layer 104 and the inner layer 106, wherein the adhesion promoter 120 bonds to the first plastic material 110 and the second plastic material 112.

In step S14, the multilayer wall 102 is corrugated after the co-extrusion, to create a corrugated conduit 100. The conduit 100 is cooled, wherein due to the higher hardening speed the inner layer 106 hardens earlier than the outer layer 104 and serves as a supporting body for the still at least partially deformable outer layer 104. When the inner layer 106 has hardened, the inner layer keeps a given shape, before the outer layer 104 hardens.

In step S16, The hardened inner layer 106 prevents plastic deformation of the outer layer 106, when the not yet completely hardened conduit 100 is packaged or rolled up for delivery or storage. In particular, the inner layer 106 prevents the deformation of the conduit 100 from a circular cross-section to an oval cross-section.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 100: conduit
- 102: multilayer wall
- 104: outer layer
- 106: inner layer
- 108: middle layer
- 110: first plastic material
- 112: second plastic material
- 114: third plastic material
- 116: polyurethane material
- 118: polypropylene material
- 120: adhesion promoter

## Claims

1. A method to produce a conduit (100), comprising:
supplying a molten first plastic material (110) and a molten second plastic material (112), wherein the second plastic material (110) has a higher hardening speed than the first plastic material (112);
creating a multilayer wall (102) of the conduit (100) by co-extruding the molten first plastic material (110) to form an outer layer (104) of the multilayer wall (102) and co-extruding the molten second plastic material (112) to form an inner layer (106) of the multilayer wall (102);
cooling the conduit (100), wherein due to the higher hardening speed of the second plastic material 112, the inner layer (106) hardens earlier than the outer layer (104) and serves as a supporting body for the still at least partially deformable outer layer (104).

2. The method of claim 1,
wherein a polyurethane material (116) is supplied as the first plastic material (110).

3. The method of one of the previous claims,
wherein the first plastic material (110) is supplied with a crystallization additive.

4. The method of one of the previous claims,
wherein the first plastic material (110) is supplied with a slip additive.

5. The method of one of the previous claims,
wherein a polypropylene material (118) is supplied as the second plastic material (112).

6. The method of one of the previous claims, further comprising
corrugating the multilayer wall (102) after the co-extrusion, to create a corrugated conduit (100).

7. The method of one of the previous claims, further comprising
supplying an adhesion promoter (120) and co-extruding the adhesion promoter (120) to form a middle layer (108) of the multilayer wall (102) between the outer layer (104) and the inner layer (106), wherein the adhesion promoter (120) bonds to the first plastic material (110) and the second plastic material (112).

8. A conduit (100) with a multilayer wall (102), the multilayer wall (102) comprising:
an outer layer (104) made of a first plastic material (110);
an inner layer (106) made of a second plastic material (112);
wherein the second plastic material (112) has a higher hardening speed than the first plastic material (110), such that during cooling of the outer layer (104) and the inner layer (106), due to the higher hardening speed the inner layer (106) hardens earlier than the outer layer (104) and serves as a supporting body for the still at least partially deformable outer layer (104).

9. The conduit (100) of claim 8,
wherein the first plastic material (110) has shore hardness between A 75 and D 75.

10. The conduit (100) of claim 8 or 9,
wherein the second plastic material (112) has a modulus between 200 MPa and 1500 MPa.

11. The conduit (100) of one of claims 8 to 10,
wherein the multilayer wall (102) has a wall thickness between 0,5 mm and 1,5 mm.

12. The conduit (100) of one of claims 8 to 11,
wherein the outer layer (104) has a layer thickness between 30% and 85% of the wall thickness of the multilayer wall (102).

13. The conduit (100) of one of claims 8 to 12,
wherein the inner layer (106) has a layer thickness between 10% to 65% of the wall thickness of the multilayer wall (102).

14. The conduit (100) of one of claims 8 to 13,
wherein the outer layer (104) has a first color and the inner layer (106) has a second color, wherein the first color and the second color are different from each other.

15. The conduit (100) of one of claims 8 to 14, further comprising
a middle layer (108) having a layer thickness between 5% to 20% of the wall thickness of the multilayer wall (102).

16. The conduit (100) of claim 15,
wherein the multilayer wall (102) is corrugated, the first plastic material (110) is a polyurethane material (116), the second plastic material (112) is a polypropylene material (118), wherein the middle layer (108) is an adhesion promoter (120) configured to bond to the polyurethane material (116) and the polypropylene material (118).
